# EUROPEAN PATENT SPECIFICATION

(11) **EP 4 285 717 B1**
(45) Date of publication and mention of the grant of the patent: **04.11.2026**
(21) Application number: 23176782.3
(22) Date of filing: 01.06.2023
(51) Int. Cl.: A01K 43/00

(54) **EGG CLEANING DEVICE FOR REMOVING FEATHERS ATTACHED TO EGGS**
EIERREINIGUNGSVORRICHTUNG ZUM ENTFERNEN VON AN EIER BEFESTIGTEN FEDERN
DISPOSITIF DE NETTOYAGE DES OEUFS POUR ENLEVER LES PLUMES FIXÉES AUX OEUFS

(30) Priority: 01.06.2022 NL 2032056
(43) Date of publication of application: 06.12.2023
(73) Proprietor: Van de Ven Beheer B.V., 5521 DZ Eersel (NL)
(72) Inventor: VEN, van de, Dick Hendrikus Cornelis, 5521NB Eersel (NL); VAN DEN AKER, Martinus, 5283 PV Boxtel (NL); MAAS, Dirk Willibrodus Franciscus, 5531 GB Bladel (NL)
(74) Representative: Verhees, Godefridus Josephus Maria

(56) References cited:
- WO-A1-95/00012
- US-A- 2 979 746

## Description

### Technical field of the invention

The invention relates to an egg cleaning device for removing feathers attached to eggs, comprising:
- two parallel elongated transport elements,
- drive means for moving the transport elements in the longitudinal direction,
- transport rollers extending at right angles to the transport elements and between the transport elements and connected at both ends to the transport elements, the transport rollers being spaced at such a distance from each other so that eggs can be carried and transported by two adjacent transport rollers, and
- feather plucking means for removing feathers attached to eggs.

### Background of the invention

An egg cleaning device according to the preamble of claim 1 is known from US 2 979 746 A. In the known egg cleaning device for removing feathers from eggs, eggs are passed under a rotating brush, the brush sweeping the feathers off the eggs.

### Summary of the invention

An object of the invention is to provide an egg cleaning device of the type described in the preamble in which feathers attached to eggs can be removed more efficiently from the eggs. To this end, the egg cleaning device according to the invention is characterized in that:
- the egg cleaning device further comprises rotation means for rotating the transport rollers such that adjacent transport rollers rotate in the opposite direction of rotation, and
- the transport rollers are the feather plucking means and are configured to clamp feathers between the transport rollers and pull them off the eggs.

To allow adjacent transport rollers to rotate in opposite directions in a simple manner, an embodiment of the egg cleaning device according to the invention is characterized in that a drive wheel is present at one of the ends of each transport roller, the drive wheels of two adjacent transport rollers being present at opposite ends of the transport rollers, and the egg cleaning device is provided at both ends of the transport rollers with an elongated contact surface over which the drive wheels roll during operation and which is parallel to the transport elements, wherein at one end of the transport rollers the contact surface is present below the drive wheels and at the other end of the transport rollers the contact surface is present above the drive wheels is.

In an embodiment of the egg cleaning device, the contact surface is provided with teeth and forms part of a toothed rack, and that the drive wheels are designed as gear wheels. This ensures that the transport rollers rotate during operation.

In another embodiment of the egg cleaning device, the contact surface forms a friction surface and the drive wheels are designed as friction wheels. This allows the drive wheels to slip over the friction surface when overloaded, so that no damage is caused. By using friction wheels with a different diameter, the rotation speed of the transport rollers can be adjusted easily.

In order to be able to use the full length of the transport elements effectively, a further embodiment of the egg cleaning device according to the invention is characterized in that during operation the eggs are transported over a transport path, the direction of rotation of each transport roller being in a first part of the transport path. opposite to the direction of rotation of this transport roller in a second part of the transport path. To be able to pluck feathers from the eggs, adjacent transport rollers have to rotate towards each other at the top of the rollers. Since adjacent transport rollers rotate in different directions, there will be two transport rollers rotating away from each other in addition to two transport rollers rotating towards each other. The feathers cannot be plucked from eggs that are present between two transport rollers rotating away from each other. Eggs should therefore not be placed in these places, so that only half of the length can be used effectively. By reversing the direction of the transport rollers halfway, these places can also be used effectively to pluck feathers from eggs, so that the entire length of the transport elements can be used effectively.

A constructively simple solution to ensure that the direction of rotation of the conveyor rollers reverses halfway is characterized in that at each end of the conveyor rollers in one of the parts of the transport path the contact surface is below the drive wheels and in the other part of the transport path the contact surface is above the drive wheels.

In an embodiment of the egg cleaning device, the transport rollers are formed by cylinders provided with lateral surfaces, with adjacent transport rollers having their lateral surfaces in contact with each other or being spaced at a distance from each other that is less than the thickness of the shaft of a feather. The advantage of this embodiment is that the rollers have a simple shape and are therefore also easy to manufacture.

In another embodiment of the egg cleaning device, the transport rollers are formed by a number of discs located next to each other at a mutual distance, the center distance between two adjacent transport rollers being smaller than the sum of the radius of the discs of one conveyor roller and the radius of the discs of the other conveyor roller, so that the discs of the one conveyor roller are between the discs of the other conveyor roller, and wherein the side walls of the discs of the one conveyor roller are contact with the side walls of the discs of the other conveyor roller or where the side walls of the side walls of the conveyor rollers are spaced apart less than the thickness of the shaft of a feather. The advantage of this embodiment is that the feathers can be grasped better because the places where the feathers can be grasped are closer to the egg than if the transport rollers are designed as cylinders.

In order to be able to move the transport elements in a simple manner, a further embodiment of the egg cleaning device is characterized in that the transport elements are formed by endless flexible elements which are each diverted around two diverting wheels which are spaced apart, one of the diverting wheels of each transport element is rotated by the drive wheels during operation.

Yet another embodiment of the egg cleaning device is characterized in that the transport elements are formed by chains and the transport rollers are provided at both ends with protruding shaft parts which pass through openings in links of the chains. At the places where the transport rollers are located, the shaft parts replace the pins of the chain, so that a good and effective connection between the transport rollers and the transport elements is achieved.

### Brief description of the drawings

The invention will be explained in more detail below on the basis of exemplary embodiments of the egg cleaning device according to the invention shown in the drawings. Hereby shows:
Figure 1 a perspective view of a first embodiment of the egg cleaning device;
Figure 2 the egg cleaning device shown in figure 1 in front view;
Figure 3 the egg cleaning device shown in figure 1 in top view;
Figure 4 the egg cleaning device shown in figure 1 in side view;
Figure 5 an enlargement of detail A in figure 2;
Figure 6 an enlargement of detail B in figure 2; and
Figure 7 an enlargement of a detail of a second embodiment of the egg cleaning device.

### Detailed description of the drawings

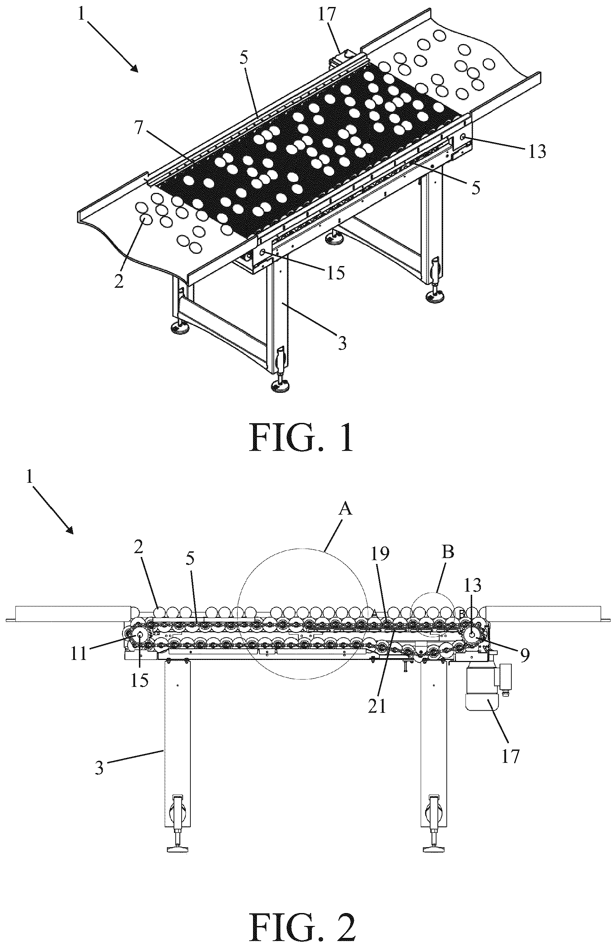

Figures 1-4 show a first embodiment of the egg cleaning device according to the invention in various views. The egg cleaning device 1 has a frame 3 carrying feather plucking means. These feather plucking means have transport means that moved eggs 2 over a transport path. The transport means have two elongate, flexible, endless transport elements which are parallel to each other and spaced apart. These transport elements are formed by chains 5. The transport means furthermore have transport rollers 7 which extend between the chains 5 and are present at right angles to the chains, each chain 5 being wrapped around two diverting wheels 9 and 11 which are spaced apart, see figure 2 The two driven diverting wheels 9 are mounted on a common shaft 13, which is connected to drive means formed by an electric motor 17. The two non-driven diverting wheels 11 are also mounted on a common shaft 15.

The transport rollers 7 are at their ends connected to the chains 5. At one of the ends of each transport roller 7 there is a drive wheel formed by a gear wheel 19. Near both ends of the transport rollers, the frame is provided with an elongated contact surface over which the drive wheels roll during operation. This contact surface is provided with teeth and forms part of a gear rack 21 with which the gears 19 mesh. By moving the transport rollers 7 relative to the toothed racks 21, the gears 19 and thus also the transport rollers 7 rotate.

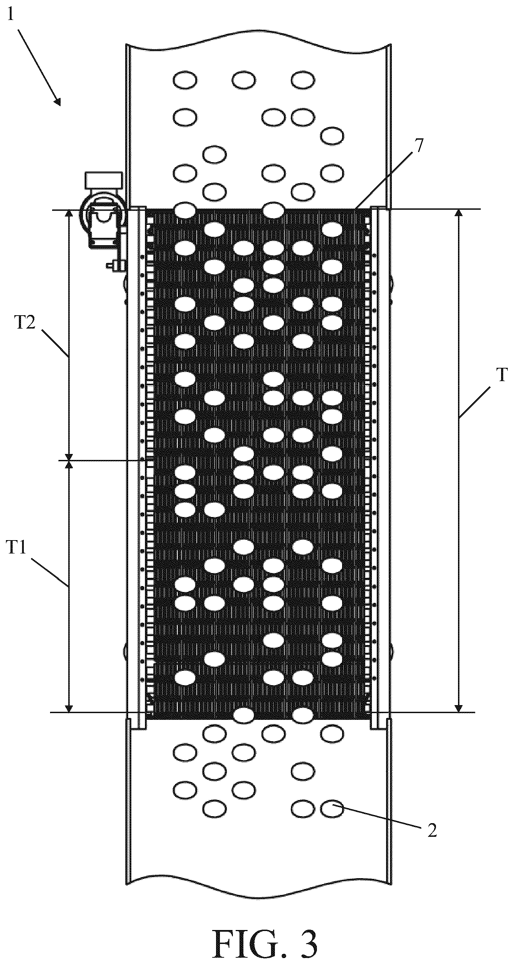

During operation, the eggs are moved by the conveying means over a conveying path T, the direction of rotation of each conveying roller 7 in a first part T1 of the conveying path is opposite to the direction of rotation of this conveying roller in a second part T2 of the conveying path, see figure 3.

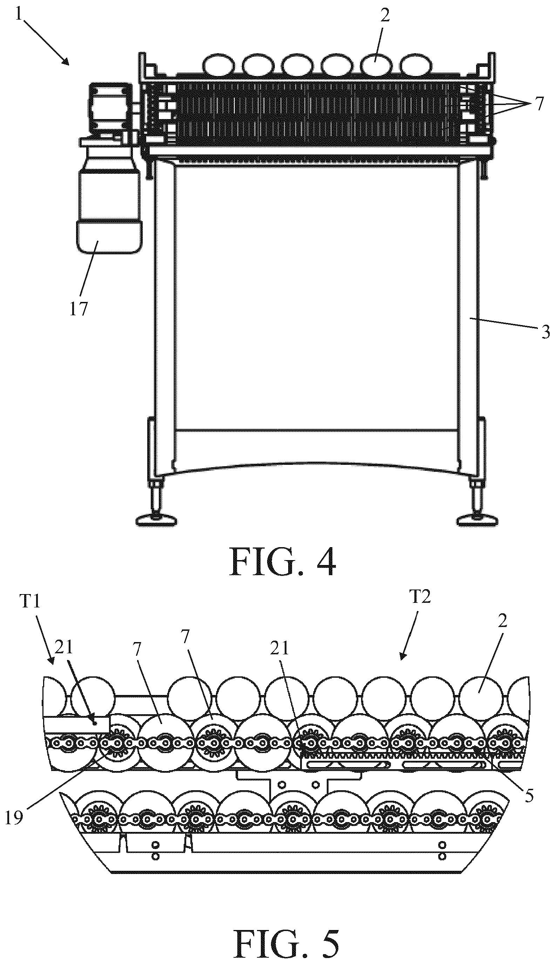

In figure 5 the detail A indicated in figure 2 is shown enlarge. The gear wheels 19 of two adjacent transport rollers 7 are present at ends remote from each other. At one end of the transport rollers 7, the gear rack 21 is present below the gear wheels 19 and at the other end of the transport rollers, the gear rack 21 is present above the gear wheels 19. In the first part T1 of the track, the gear rack 21, at the ends of the transport rollers 7 shown in Figure 5, is present above the gear wheels 19, and in the second part T2 of the track, the gear rack 21 is present below the gear wheels 19. As a result, the transport rollers 7 rotate towards each other under the eggs 2 either in the first part T1 or in the second part T2 of the track, whereby feathers are removed from the eggs 2.

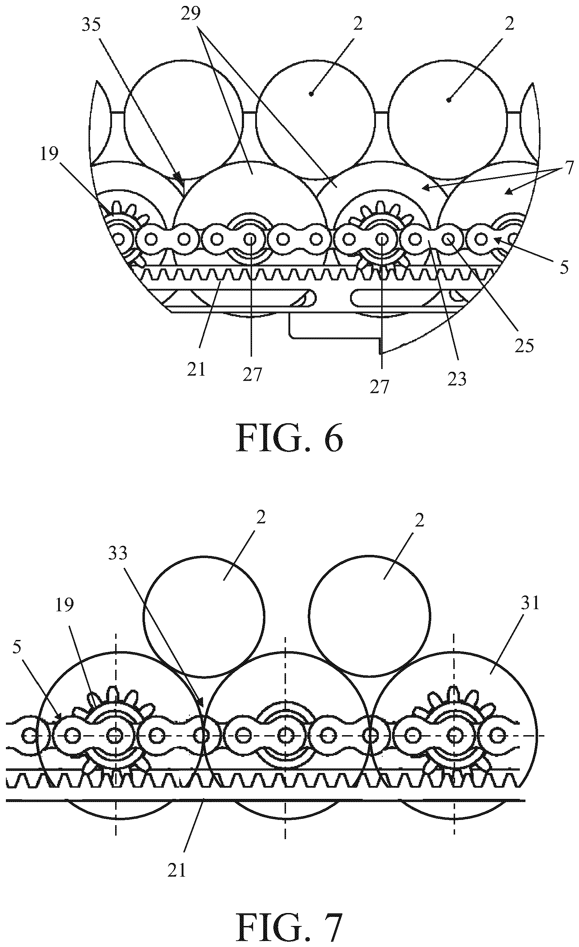

In figure 6 the detail B indicated in figure 2 is shown enlarged, in which the transport rollers 7, the chain 5 and the gearwheels 19 and gear rack 21 are clearly visible. The chains 5 consist of links 23 which are mutually connected by pins 25. The transport rollers 7 are provided at both ends with protruding shaft parts 27 which protrude through openings in links 23 of the chains 5 and replace the pins at these locations. The transport rollers 7 are formed by a number of discs 29, which are spaced apart next to each other. The center distance between two adjacent transport rollers 7 is smaller than the sum of the radius of the discs 29 of one transport roller 7 and the radius of the discs 29 of the other transport roller 7, so that the discs 29 of the one transport roller are located between the discs 29 of the other transport roller, see also figure 4. The discs 29 of the one transport roller have their side walls in contact with the side walls of the discs 29 of the other transport roller. During the transport of the eggs 2, the eggs rotate, as a result of which feathers attached to the eggs end up between the discs 29 of the transport rollers 7 and become clamped between discs of two adjacent transport rollers rotating towards each other and are pulled off the eggs. Under the transport rollers 7, the discs 29 come apart again, so that the feathers are no longer clamped and fall down. Instead of against each other, the side walls of the discs 29 of the transport rollers may also be spaced at a small distance, the distance being less than the thickness of the shaft of a feather in order to ensure that the feathers are clamped tightly.

Figure 7 shows an enlargement of a detail of a second embodiment of the egg cleaning device according to the invention. This detail is present in the same place in the egg cleaning device as the detail of the first embodiment shown in figure 6 . In this egg cleaning device the transport rollers 31 are formed by cylinders provided with lateral surfaces, for instance solid cylinders. Adjacent transport rollers 31 are with their lateral surfaces in contact with each other or are present at a distance from each other which is smaller than the thickness of the shaft of a feather. At the location 33 of the contact or there where the lateral surfaces are closest together, feathers can be clamped and subsequently pulled off the eggs 2. In this embodiment this location 33 is further away from the eggs 2 than in the first embodiment where this location 35 is closer to the eggs 2, as can be seen in figure 6. As a result, short feathers cannot be clamped and pulled loose. However, this second embodiment is cheaper to manufacture.

Although the invention has been elucidated in the foregoing with reference to the drawings, it should be noted that the invention is by no means limited to the embodiments shown in the drawings. The invention also extends to all embodiments deviating from the embodiment shown in the drawings and within the scope defined by the claims. For example, the contact surface can form a friction surface instead of being provided with teeth and the drive wheels can be designed as friction wheels instead of gears.

## Claims

1. Egg cleaning device (1) for removing feathers attached to eggs (2), comprising:
- two parallel elongated transport elements (5),
- drive means (19) for moving the transport elements (5) in the longitudinal direction,
- transport rollers (7; 31) extending at right angles to the transport elements (5) and between the transport elements (5) and connected at both ends to the transport elements (5), the transport rollers (7; 31) being spaced at such a distance from each other so that eggs (2) can be carried and transported by two adjacent transport rollers (7; 31), and
- feather plucking means for removing feathers attached to eggs (2),
**characterized in that**:
- the egg cleaning device further comprises rotation means for rotating the transport rollers (7; 31) such that adjacent transport rollers (7; 31) rotate in the opposite direction of rotation, and
- the transport rollers (7; 31) are the feather plucking means and are configured to clamp feathers between the transport rollers (7; 31) and pull them off the eggs (2).

2. Egg cleaning device according to claim 1, **characterized in that** a drive wheel (19) is present at one of the ends of each transport roller (7; 31), the drive wheels (19) of two adjacent transport rollers (7; 31) being present at opposite ends of the transport rollers, and the egg cleaning device is provided at both ends of the transport rollers (7; 31) with an elongated contact surface (21) over which the drive wheels (19) roll during operation and which is parallel to the transport elements (5), wherein at one end of the transport rollers (7; 31) the contact surface (21) is present below the drive wheels (19) and at the other end of the transport rollers (7; 31) the contact surface (21) is present above the drive wheels (19).

3. Egg cleaning device according to claim 2, **characterized in that** the contact surface (21) is provided with teeth and forms part of a toothed rack, and that the drive wheels (19) are designed as gear wheels.

4. Egg cleaning device as claimed in claim 2, **characterized in that** the contact surface forms a friction surface and that the drive wheels are designed as friction wheels.

5. Egg cleaning device according to any one of the preceding claims, **characterized in that** during operation the eggs (2) are transported over a transport path (T), the direction of rotation of each transport roller (7; 31) being in a first part (T1) of the transport path. (T) opposite to the direction of rotation of this transport roller (7; 31) in a second part (T2) of the transport path (T).

6. Egg cleaning device according to claim 5 and one of claims 2-4, **characterized in that** at each end of the transport rollers (7; 31) the contact surface in one of the parts (T1) of the transport path (T) is present below the drive wheels (19) and in the other part (T2) of the transport path (T) the contact surface is present above the driving wheels (19).

7. Egg cleaning device according to any one of the preceding claims, **characterized in that** the transport rollers (31) are formed by cylinders provided with lateral surfaces, with adjacent transport rollers (31) having their lateral surfaces in contact with each other or being spaced at a distance from each other that is less than the thickness of the shaft of a feather.

8. Egg cleaning device according to any one of the preceding claims 1-6, **characterized in that** the transport rollers (7) are formed by a number of discs (29) located next to each other at a mutual distance, the center distance between two adjacent transport rollers (7) being smaller than the sum of the radius of the discs (29) of one conveyor roller (7) and the radius of the discs (29) of the other conveyor roller (7), so that the discs (29) of the one conveyor roller (7) are between the discs (29) of the other conveyor roller (7), and wherein the side walls of the discs (29) of the one conveyor roller (7) are contact with the side walls of the discs (29) of the other conveyor roller (7) or where the side walls of the side walls of the conveyor rollers are spaced apart less than the thickness of the shaft of a feather.

9. Egg cleaning device according to any one of the preceding claims, **characterized in that** the transport elements (5) are formed by endless flexible elements which are each diverted around two diverting wheels (9, 11) which are spaced apart, one of the diverting wheels (9 , 11) of each transport element is rotated by the drive wheels (19) during operation.

10. Egg cleaning device according to any one of the preceding claims, **characterized in that** the transport elements (5) are formed by chains and the transport rollers (7; 31) are provided at both ends with protruding shaft parts (27) which pass through openings in links (23) of the chains.

## Patentansprüche

1. Eierreinigungsvorrichtung (1) zum Entfernen von an Eiern (2) haftenden Federn, umfassend:
- zwei parallele, längliche Transportelemente (5),
- Antriebsmittel (19) zum Bewegen der Transportelemente (5) in Längsrichtung,
- Transportrollen (7; 31), die sich rechtwinklig zu den Transportelementen (5) und zwischen diesen erstrecken und an beiden Enden mit den Transportelementen (5) verbunden sind, wobei die Transportrollen (7; 31) in einem solchen Abstand zueinander angeordnet sind, dass Eier (2) von zwei benachbarten Transportrollen (7; 31) getragen und transportiert werden können, und
- Federrupfmittel zum Entfernen von an Eiern (2) haftenden Federn,
**dadurch gekennzeichnet, dass**:
- die Eierreinigungsvorrichtung ferner Rotationsmittel zum Drehen der Transportrollen (7; 31) umfasst, derart, dass benachbarte Transportrollen (7; 31) in entgegengesetzter Drehrichtung rotieren, und
- die Transportrollen (7; 31) die Federrupfmittel bilden und dazu ausgebildet sind, Federn zwischen den Transportrollen (7; 31) einzuklemmen und von den Eiern (2) abzuziehen.

2. Eierreinigungsvorrichtung nach Anspruch 1, **dadurch gekennzeichnet, dass** an einem der Enden jeder Transportrolle (7; 31) ein Antriebsrad (19) vorhanden ist, wobei die Antriebsräder (19) zweier benachbarter Transportrollen (7; 31) an entgegengesetzten Enden der Transportrollen angeordnet sind, und die Eierreinigungsvorrichtung an beiden Enden der Transportrollen (7; 31) mit einer länglichen Kontaktfläche (21) versehen ist, über welche die Antriebsräder (19) während des Betriebs abrollen und die parallel zu den Transportelementen (5) verläuft, wobei an einem Ende der Transportrollen (7; 31) die Kontaktfläche (21) unterhalb der Antriebsräder (19) und am anderen Ende der Transportrollen (7; 31) die Kontaktfläche (21) oberhalb der Antriebsräder (19) angeordnet ist.

3. Eierreinigungsvorrichtung nach Anspruch 2, **dadurch gekennzeichnet, dass** die Kontaktfläche (21) mit Zähnen versehen ist und einen Teil einer Zahnstange bildet, und dass die Antriebsräder (19) als Zahnräder ausgebildet sind.

4. Eierreinigungsvorrichtung nach Anspruch 2, **dadurch gekennzeichnet, dass** die Kontaktfläche eine Reibfläche bildet und dass die Antriebsräder als Reibräder ausgebildet sind.

5. Eierreinigungsvorrichtung nach einem der vorhergehenden Ansprüche, **dadurch gekennzeichnet, dass** die Eier (2) im Betrieb über eine Transportstrecke (T) transportiert werden, wobei die Drehrichtung jeder Transportwalze (7; 31) in einem ersten Teil (T1) der Transportstrecke (T) entgegengesetzt zur Drehrichtung dieser Transportwalze (7; 31) in einem zweiten Teil (T2) der Transportstrecke (T) ist.

6. Eierreinigungsvorrichtung nach Anspruch 5 und einem der Ansprüche 2 bis 4, **dadurch gekennzeichnet, dass** an jedem Ende der Transportwalzen (7; 31) die Kontaktfläche in einem der Teile (T1) der Transportstrecke (T) unterhalb der Antriebsräder (19) und im anderen Teil (T2) der Transportstrecke (T) oberhalb der Antriebsräder (19) angeordnet ist.

7. Eierreinigungsvorrichtung nach einem der vorhergehenden Ansprüche, **dadurch gekennzeichnet, dass** die Transportwalzen (31) durch Zylinder mit Mantelflächen gebildet sind, wobei benachbarte Transportwalzen (31) mit ihren Mantelflächen aneinander anliegen oder in einem Abstand zueinander angeordnet sind, der kleiner ist als die Dicke des Schafts einer Feder.

8. Eierreinigungsvorrichtung nach einem der vorhergehenden Ansprüche 1 bis 6, **dadurch gekennzeichnet, dass** die Transportrollen (7) durch eine Anzahl von Scheiben (29) gebildet sind, die in gegenseitigem Abstand nebeneinander angeordnet sind, wobei der Mittenabstand zwischen zwei benachbarten Transportrollen (7) kleiner ist als die Summe aus dem Radius der Scheiben (29) der einen Transportrolle (7) und dem Radius der Scheiben (29) der anderen Transportrolle (7), sodass die Scheiben (29) der einen Transportrolle (7) zwischen den Scheiben (29) der anderen Transportrolle (7) liegen, und wobei die Seitenwände der Scheiben (29) der einen Transportrolle (7) an den Seitenwänden der Scheiben (29) der anderen Transportrolle (7) anliegen oder wobei der Abstand zwischen den Seitenwänden der Transportrollen geringer ist als die Dicke des Schafts einer Feder.

9. Eierreinigungsvorrichtung nach einem der vorhergehenden Ansprüche, **dadurch gekennzeichnet, dass** die Transportelemente (5) durch endlose flexible Elemente gebildet sind, die jeweils um zwei beabstandete Umlenkräder (9, 11) geführt sind, wobei eines der Umlenkräder (9, 11) jedes Transportelements im Betrieb von den Antriebsrädern (19) angetrieben wird.

10. Eierreinigungsvorrichtung nach einem der vorhergehenden Ansprüche, **dadurch gekennzeichnet, dass** die Transportelemente (5) durch Ketten gebildet sind und die Transportrollen (7; 31) an beiden Enden mit vorstehenden Wellenabschnitten (27) versehen sind, die durch Öffnungen in Kettengliedern (23) der Ketten hindurchragen.

## Revendications

1. Dispositif de nettoyage d'œufs (1) pour retirer les plumes attachées aux œufs (2), comprenant :
- deux éléments de transport allongés parallèles (5),
- des moyens d'entraînement (19) pour déplacer les éléments de transport (5) dans la direction longitudinale,
- des rouleaux de transport (7 ; 31) s'étendant perpendiculairement aux éléments de transport (5) et entre ceux-ci, et reliés aux deux extrémités aux éléments de transport (5), les rouleaux de transport (7 ; 31) étant espacés les uns des autres de telle sorte que des œufs (2) puissent être portés et transportés par deux rouleaux de transport (7 ; 31) adjacents, et
- des moyens d'arrachage de plumes pour retirer les plumes attachées aux œufs (2),
**caractérisé en ce que** :
- le dispositif de nettoyage d'œufs comprend en outre des moyens de rotation pour faire tourner les rouleaux de transport (7 ; 31) de telle sorte que des rouleaux de transport (7 ; 31) adjacents tournent dans des sens de rotation opposés, et
- les rouleaux de transport (7 ; 31) constituent les moyens d'arrachage de plumes et sont configurés pour pincer les plumes entre les rouleaux de transport (7 ; 31) et les arracher des œufs (2).

2. Dispositif de nettoyage d'œufs selon la revendication 1, **caractérisé en ce qu'**une roue d'entraînement (19) est présente à l'une des extrémités de chaque rouleau de transport (7 ; 31), les roues d'entraînement (19) de deux rouleaux de transport (7 ; 31) adjacents étant situées aux extrémités opposées des rouleaux de transport, et le dispositif de nettoyage d'œufs est pourvu, aux deux extrémités des rouleaux de transport (7 ; 31), d'une surface de contact allongée (21) sur laquelle roulent les roues d'entraînement (19) pendant le fonctionnement et qui est parallèle aux éléments de transport (5), la surface de contact (21) étant située sous les roues d'entraînement (19) à une extrémité des rouleaux de transport (7 ; 31) et au-dessus des roues d'entraînement (19) à l'autre extrémité des rouleaux de transport (7 ; 31).

3. Dispositif de nettoyage d'œufs selon la revendication 2, **caractérisé en ce que** la surface de contact (21) est pourvue de dents et fait partie d'une crémaillère dentée, et **en ce que** les roues d'entraînement (19) sont conçues sous forme de roues dentées.

4. Dispositif de nettoyage d'œufs selon la revendication 2, **caractérisé en ce que** la surface de contact forme une surface de friction et **en ce que** les roues d'entraînement sont conçues sous forme de roues de friction.

5. Dispositif de nettoyage d'œufs selon l'une quelconque des revendications précédentes, **caractérisé en ce que**, pendant le fonctionnement, les œufs (2) sont transportés le long d'un trajet de transport (T), le sens de rotation de chaque rouleau de transport (7 ; 31) dans une première partie (T1) du trajet de transport (T) étant opposé au sens de rotation de ce rouleau de transport (7 ; 31) dans une seconde partie (T2) du trajet de transport (T).

6. Dispositif de nettoyage d'œufs selon la revendication 5 et l'une des revendications 2 à 4, **caractérisé en ce qu'**à chaque extrémité des rouleaux de transport (7 ; 31), la surface de contact est située au-dessous des roues d'entraînement (19) dans l'une des parties (T1) du trajet de transport (T), et au-dessus des roues d'entraînement (19) dans l'autre partie (T2) du trajet de transport (T).

7. Dispositif de nettoyage d'œufs selon l'une quelconque des revendications précédentes, **caractérisé en ce que** les rouleaux de transport (31) sont constitués de cylindres pourvus de surfaces latérales, les surfaces latérales de rouleaux de transport (31) adjacents étant en contact l'une avec l'autre ou espacées l'une de l'autre d'une distance inférieure à l'épaisseur du rachis d'une plume.

8. Dispositif de nettoyage d'œufs selon l'une quelconque des revendications 1 à 6 précédentes, **caractérisé en ce que** les rouleaux de transport (7) sont formés par un certain nombre de disques (29) disposés les uns à côté des autres à une certaine distance les uns des autres, l'entraxe entre deux rouleaux de transport (7) adjacents étant inférieur à la somme du rayon des disques (29) de l'un des rouleaux de transport (7) et du rayon des disques (29) de l'autre rouleau de transport (7), de sorte que les disques (29) de l'un des rouleaux de transport (7) se trouvent entre les disques (29) de l'autre rouleau de transport (7), et dans lequel les parois latérales des disques (29) de l'un des rouleaux de transport (7) sont en contact avec les parois latérales des disques (29) de l'autre rouleau de transport (7) ou dans lequel les parois latérales des rouleaux de transport sont espacées d'une distance inférieure à l'épaisseur de la tige d'une plume.

9. Dispositif de nettoyage d'œufs selon l'une quelconque des revendications précédentes, **caractérisé en ce que** les éléments de transport (5) sont formés par des éléments flexibles sans fin qui sont chacun guidés autour de deux roues de renvoi (9, 11) espacées l'une de l'autre, l'une des roues de renvoi (9, 11) de chaque élément de transport étant entraînée en rotation par les roues motrices (19) pendant le fonctionnement.

10. Dispositif de nettoyage d'œufs selon l'une quelconque des revendications précédentes, **caractérisé en ce que** les éléments de transport (5) sont formés par des chaînes et **en ce que** les rouleaux de transport (7 ; 31) sont pourvus, à leurs deux extrémités, de parties d'axe saillantes (27) qui traversent des ouvertures ménagées dans des maillons (23) des chaînes.
